(19) Europäisches Patentamt
European Patent Office
Office européen des brevets

(11) **EP 1 000 104 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(21) Anmeldenummer: **98941365.3**

(22) Anmeldetag: **20.07.1998**

(51) Int Cl.7: **C08G 18/79**, C08G 18/70, C08G 18/08, C08K 5/29, C09D 175/06, C09D 133/04

(86) Internationale Anmeldenummer:
**PCT/EP98/04487**

(87) Internationale Veröffentlichungsnummer:
**WO 99/006460 (11.02.1999 Gazette 1999/06)**

(54) **LATENT VERNETZENDE WÄSSERIGE DISPERSIONEN ENTHALTEND EIN POLYURETHAN**

LATENT CROSS-LINKING AQUEOUS DISPERSIONS CONTAINING A POLYURETHANE

DISPERSIONS AQUEUSES A RETICULATION LATENTE CONTENANT UN POLYURETHANE

(84) Benannte Vertragsstaaten:
**AT BE CH DE ES FR GB IT LI NL**

(30) Priorität: **31.07.1997 DE 19733044**
**15.04.1998 DE 19816527**
**15.04.1998 DE 19816528**
**25.06.1998 DE 19828251**

(43) Veröffentlichungstag der Anmeldung:
**17.05.2000 Patentblatt 2000/20**

(73) Patentinhaber: **BASF AKTIENGESELLSCHAFT**
**67056 Ludwigshafen (DE)**

(72) Erfinder:
- **LICHT, Ulrike**
**D-68163 Mannheim (DE)**
- **HÄBERLE, Karl**
**D-67346 Speyer (DE)**
- **WISTUBA, Eckehardt**
**D-67098 Bad Dürkheim (DE)**

(56) Entgegenhaltungen:
**EP-A- 0 198 343**
**EP-A- 0 368 375**
**WO-A-95/08583**
**DE-A- 2 446 440**
**US-A- 4 113 676**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 000 104 B1

## Beschreibung

1. Latent vernetzende wässerige Polyurethandispersionen, enthaltend

I) eine disperse Phase (P.I), enthaltend

Ia) ein Polyurethan (Ia), das neben hydrophilen Gruppen, die die Wasserdispergierbarkeit bewirken, Carbodiimid-Gruppen trägt und im wesentlichen keine Carboxylgruppen trägt
oder

Ib) eine physikalische Mischung aus

Ibi) einem Polyurethan (Ibi), das hydrophile Gruppen, die die Wasserdispergierbarkeit bewirken, trägt und im wesentlichen keine Carbodiimid oder Carboxylgruppen trägt,
und

Ibii) einem Carbodiimid (Ibii), das im wesentlichen keine hydrophilen Gruppen, die die Wasserdispergierbarkeit bewirken, trägt.

II) eine disperse Phase (P.II), enthaltend ein sonstiges Polymer (II), das Carboxylgruppen und im wesentlichen keine Carbodiimid-Gruppen trägt.

Weiterhin betrifft die Erfindung die Verwendung der erfindungsgemäßen wässerigen Dispersionen als Imprägnierungsmittel, Beschichtungsmittel oder Klebstoff sowie die unter Verwendung dieser Dispersionen hergestellten imprägnierten, beschichteten oder verklebten Gegenstände.

Wässerige Dispersionen, die in dispergierter Form ein Polyurethan enthalten, sind allgemein bekannt. Damit Beschichtungen, die aus dem Polyurethan hergestellt werden, besonders gute mechanische Eigenschaften aufweisen, setzt man diesen Dispersionen eine Vernetzerkomponente zu. Dabei ist es besonders erwünscht, daß der Vernetzer den Molekulargewichtsaufbau des Polyurethans erst bewirkt, wenn die Polyurethandispersion nach dem Auftrag auf das zu beschichtende Werkstück bereits verfilmt ist. Unter diesen Umständen erhält man Filme, die eine besonders hohe Kohäsion aufweisen, da dann auch die Polymermoleküle eines Dispersionsteilchens mit den Polymermolekülen eines anderen benachbarten Dispersionsteilchen über eine kovalente Bindung verknüpft sein können.

Eine besonders gute Kohäsion der Filme ist beispielsweise auf dem Klebstoffgebiet besonders dann erforderlich, wenn der Klebeverbund unter Einwirkung von Wärme mechanisch belastet wird.

Um Klebeverbunde zu erhalten, die auch unter diesen Bedingungen noch eine ausreichende Festigkeit aufweisen, wurde z. B. in der EP-A-206059 empfohlen, den Dispersionen kurze Zeit vor deren Verarbeitung als Klebstoff als Vernetzer ein wasseremulgierbares Polyisocyanat zuzusetzen.

Der Nachteil dieser Zweikomponenten-Systeme besteht jedoch darin, daß die Topfzeit, d.h. der Zeitraum, in dem diese Systeme nach ihrer Vermischung verarbeitet werden können, eng begrenzt ist. Da das Zweikomponenten-System nicht über einen längeren Zeitraum hinweg lagerbar ist und der Verarbeiter sich ein bestimmte Klebstoffmenge, die er innerhalb eines Arbeitszyklus verarbeiten kann, extra herstellen muß, ist der Arbeitsaufwand für den Verarbeiter der Klebstoffe bei Zweikomponenten-Systemen gegenüber Einkomponenten-Systemen erhöht.

Aus der US 4977219 und der 5117059 sind Mischungen einer wässerigen Dispersion eines Carbodiimides und einer wässerigen Dispersion eines Emulsions-Polymeren mit Carboxylat-Gruppen bekannt, wobei die erstgenannte Dispersion mit Hilfe üblicher oberflächenaktiver Substanzen stabilisiert wird.

Die US 5574083 betrifft eine Mischung einer wässerigen Dispersion von Carbodiimiden, wobei die Dispersion durch hydrophile Polyalkylenoxid-Reste, die die Carbodiimide tragen, stabilisiert wird. Diese Dispersionen werden mit wässerigen Dispersionen eines Emulsions-Polymeren mit Carboxylat-Gruppen abgemischt.

In der EP-A-792908 sind Mischungen einer wässerigen Dispersion eines Carboxylgruppen-tragenden Polyurethans und einer wässerigen Dispersion eines Carbodiimides bekannt, wobei die Dispersion mit Hilfe üblicher oberflächenaktiver Substanzen stabilisiert wird.

Gemäß der Lehre der 4 vorgenannten Schriften bewirken die Carbodiimide eine Molekulargewichtserhöhung der Carboxylgruppen-haltigen Polymere, mit denen sie abaemischt werden. Die Festiakeit von mit diesen Dispersionen hergestellten Verklebungen insbesondere in der Wärme läßt jedoch noch zu Wünschen übrig. Weiterhin ist die Topfzeit solcher Mischungen begrenzt.

Die nicht-vorveröffentlichte deutsche Patentanmeldung 19733044.4 betrifft wässerige Dispersionen eines Polyurethans, das Carbodiimid-Gruppen trägt.

Die Aufgabe der vorliegenden Erfindung bestand daher darin, eine weitere einkomponentige Polyurethandispersion zur Verfügung zu stellen, die die Nachteile des Standes der Technik nicht aufweist. Sie sollen insbesondere eine gute Lagerstabilität aufweisen und die Herstellung von wärmefesten Verklebungen ermöglichen.

Demgemäß wurden die eingangs definierten wässerigen Dispersionen gefunden.

Die disperse Phase P.I enthält im allgemeinen 0,01 bis 1, bevorzugt 0,1 bis 0,5, besonders bevorzugt 0,15 bis 0,4 mol an Carbodiimidgruppen pro kg an für den Aufbau der Polyurethane Ia bzw Ibi und Ibii eingesetzten Monomere.

Geeignete Polyurethane (Ia) sind beispielsweise in der EP-A-792908 beschrieben.

Grundsätzlich kommen als Polyurethane (Ia) alle hydrophilen Polyurethane in Betracht, bei deren Aufbau Monomere mit Carbodiimid-Struktureinheiten mitverwendet werden. Die Carbodiimid-Struktureinheiten werden in das Polyurethan (Ia) bevorzugt eingeführt über Polyisocyanate (Ia1.1), enthaltend eine oder mehrere der Carbodiimid-Struktureinheiten. Derartige Polyisocyanate (Ia1.1) gehorchen bevorzugt der allgemeinen Formel Ia1.1.1

$$OCN\text{-}(R^{c}\text{-}N{=}C{=}N)_{n}\text{-}R^{c}\text{-}NCO \qquad (Ia1.1.1)$$

in der $R^c$ für einen zweiwertigen, ggf. Harnstoff-, Urethan-, Ester-, und/oder Ethergruppen aufweisenden Kohlenwasserstoffrest, wie er durch Entfernung der Isocyanatgruppen aus einem einfachen organischen Isocyanat oder einem Urethangruppen und ggf. Etheroder Estergruppen aufweisenden Präpolymer, das endständig Isocyanatgruppen trägt, erhalten wird, wobei bei Vorliegen von mehreren Resten $R^1$ im gleichen Molekül gleichzeitig auch unterschiedliche, der genannten Definition entsprechende Reste $R^1$ vorliegen können und

n für eine ganze oder (im statistischen Mittel) gebrochene Zahl von 1 bis 20, vorzugsweise von 2 bis 10, steht.

Die Carbodiimid-Struktureinheiten werden in das Polyurethan (Ia) besonders bevorzugt eingeführt über Polyisocyanate der allgemeinen Formel Ia1.1.2

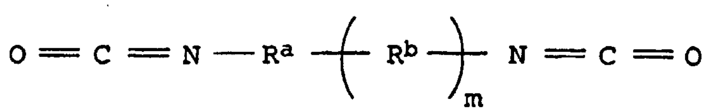

Ia1.1.2

mit

$R^a$: eine Gruppe der Formel Ia1.1.2.1

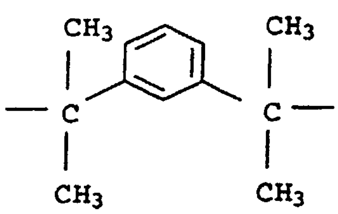

Ia1.1.2.1

$R^b$: eine Gruppe der Formel Ia1.1.2.2

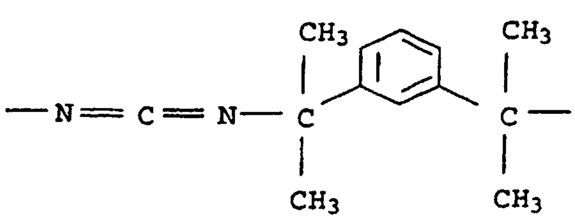

Ia1.1.2.2

und

m: eine Zahl von 1 bis 20

Im allgemeinen sind die Polyurethane (Ia) ansonsten aufgebaut aus

Ia1) Diisocyanaten, die

Ia1.1) Carbodiimid-Struktureinheiten enthalten und gegebenenfalls solchen,
Ia1.2) die frei sind von Carbodiimid-Struktureinheiten,

Ia2) Diolen, von denen

Ia2.1) 10 bis 100 mol-%, bezogen auf die Gesamtmenge der Diole (b), ein Molekulargewicht von 500 bis 5000 aufweisen, und

Ia2.2) 0 bis 90 mol-%, bezogen auf die Gesamtmenge der Diole (Ia2), ein Molekulargewicht von 60 bis 500 g/mol aufweisen,

Ia3) von den Monomeren (Ia1) und (Ia2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ia4) gegebenenfalls weiteren von den Monomeren (Ia1) bis (Ia3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ia5) gegebenenfalls von den Monomeren (Ia1) bis (Ia4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Geeignete Diisocyanatocarbodiimide (Ia1.1) sind insbesondere solche der allgemeinen Formel Ia1.1.1 oder Ia1.1.2.

Bevorzugt leiten sich die Reste $R^c$ in Formel Ia1.1.1 durch Abstraktion der Isocyanatgruppen von Monomeren (Ia1.2) ab, bei denen es sich um die Diisocyanate handelt, die üblicherweise in der Polyurethanchemie eingesetzt werden.

Insbesondere zu nennen sind als Monomere (Ial.2) Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Bei den Resten $R^c$, die sich durch Abstraktion der Isocyanatgruppen aus einem Urethangruppen, ggf. Ether- oder Estergruppen und endständige Isocyanatgruppen aufweisenden Präpolymer ableiten, handelt es sich bevorzugt um solche, die aus den Diolen (Ia2) und den Diisocyanaten (Ial.2) aufgebaut sind.

Die Herstellung der Monomere (Ia1.1) ist an sich bekannt und wird z.B. in den US 2 840 589, 2 941 966 EP-A-628 541 sowie von P.W. Campbell und K.C. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 2 504 400 und 2 552 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 2 653 120 beschrieben.

Im allgemeinen werden die Diisocyanate (Ia1.2) außer zur Herstellung der Diisocyanate (Ia1.1) auch direkt zum Aufbau der Polyurethane, die in erfindungsgemäßen Polyurethandispersionen enthalten sind, eingesetzt, da zum Aufbau der Polyurethane häufig mehr Isocyanat benötigt wird als zur Einführung der Carbodiimid-Gruppen erforderlich ist.

Zum Aufbau der Polyurethane kann man als Verbindungen (Ia1.2) außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (Ia2) vornehmlich höhermolekulare Diole (Ia2.1) in Betracht, die ein Molekulargewicht von etwa 500 bis 5000, vorzugsweise von etwa 1000 bis 3000 g/mol haben.

Bei den Diolen (Ia2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist und ein H-Atom einer Methyleneinheit auch durch einen $C_1$- bis $C_4$-Alkylrest substituiert sein kann. Beispiele sind epsilon-Caprolacton, beta-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (Ia2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. alpha,-omega-Dihydroxypolybutadien, alpha,-omega-Dihydroxypolymethacrylester oder alpha,-omega-Dihydroxypolyacrylester als Monomere (Ia2.1). Solche Verbindungen sind beispielsweise aus der EP-A-0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (Ia2) neben den Diolen (Ia2.1) noch niedermolekulare Diole (Ia2.2) mit einem Molekulargewicht von etwa 62 bis 500, vorzugsweise von 62 bis 200 g/mol, eingesetzt werden.

Als Monomere (Ia2.2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (Ia2.1), bezogen auf die Gesamtmenge der Diole (Ia2) 10 bis 100 mol-% und der Anteil der Monomere (Ia2.2), bezogen auf die Gesamtmenge der Diole (Ia2) 0 bis 90 mol-%. Besonders bevorzugt beträgt das Verhältnis der Diole (Ia2.1) zu den Monomeren (Ia2.2) 0,1 : 1 bis 5:1, besonders bevorzugt 0,2 : 1 bis 2 : 1.

Um die Wasserdispergierbarkeit der Polyurethane zu erreichen, sind die Polyurethane neben den Komponenten (Ia1) und (Ia2) aus von den Komponenten (Ia1) und (Ia2) verschiedenen Monomeren (Ia3), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut.

Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (Ia1), (Ia2), (Ia3), (Ia4) und (Ia5) wird im allgemeinen so bemessen, daß die Molmenge der (potentiell) hydrophilen Gruppen, bezogen auf die Gewichtsmenge aller Monomere (Ia1) bis (Ia5), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Poly-($C_1$- bis $C_4$-alkylen)glycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (Ia1) bis (Ia5).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations- oder Hydrolysereaktionen in die oben genannten ionischen hydrophilen Gruppen überführen lassen, also z.B. Carbonsäuregruppen

(Potentiell) ionische Monomere (Ia3) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (Ia3) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden oder Benzylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (Ia3.1)

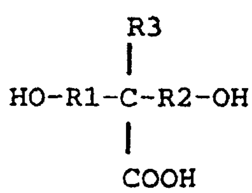

(Ia3.1)

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (IIa2) sowie die Diole (IIa1) geeignet.

Als Monomere (Ia3) mit gegenüber Isocyanaten reaktiven Aminogruppen kommen Aminocarbonsäuren wie Lysin, β-Alanin oder die in der DE-A-2034479 genannten Addukte von aliphatischen diprimären Diaminen an α,β-ungesättigte7 Carbon- oder Sulfonsäuren in Betracht.

Solche Verbindungen gehorchen beispielsweise der Formel (Ia3.2)

$$H_2N\text{-}R^4\text{-}NH\text{-}R^5\text{-}X \qquad (Ia3.2)$$

in der

- $R^4$ und $R^5$ unabhängig voneinander für eine $C_1$- bis $C_6$-Alkandiyl-Einheit, bevorzugt Ethylen

und X für COOH oder $SO_3H$ stehen.

Besonders bevorzugte Verbindungen der Formel (IV) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind. Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Im Falle der Verwendung von Monomeren (Ia3) mit Carboxylgruppen oder solchen Gruppen, die nach der Dispergierung der Polyurethane durch Hydrolysereaktionen oder Protonierung von Carboxylatgruppen in die Carboxylgruppen übertragen werden können, wird der pH-Wert der erfindungsgemäßen wässerigen Dispersion so basisch eingestellt, daß im wesentlichen keine Carboxylgruppen mehr vorliegen sondern diese praktisch vollständig neutralisiert sind. Dies ist im allgemeinen bei pH >>pKs der Fall, es gilt: $pH=pKs-\log c_{Säure}/c_{Salz}$.

Bevorzugt beträgt der pH mindestens 8.

Die Monomere (Ia4), die von den Monomeren (Ia1) bis (Ia3) verschieden sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A-1 129 128), Ketazine (vg1. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-% bezogen auf die Gesamtmenge der Komponenten (Ia2) und (Ia4), eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (Ia4) höher als zweiwertige Isocyanate eingesetzt werden. Handelsübliche Verbindungen sind beispielsweise das Isocyanurat oder das Biuret des Hexamethylendiisocyanats.

Monomere (Ia5), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-alpha, alpha-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (Ia1) bis (Ia5) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit Isocyanaten in einer Additionsreaktion reagieren können.

0.5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (Ia1) bis (Ia5) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (Ia1) bis (Ia5) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird. Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:

Nach dem "Acetonverfahren" wird in einem mit Wasser mischbaren und bei Normaldruck unter 100°C siedenden Lösungsmittel aus den Komponenten (Ia1) bis (Ia3) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der

größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 $s^{-1}$).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A-3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Nach einer Variante der Erfindungen liegen in der dispersen Phase P.I das hydrophile Polyurethan Ibi und ein Carbodiimid Ibii in Form einer physikalischen Mischung vor.

Das Polyurethan Ibi kann genauso aufgebaut sein wie das Polyurethan Ia mit dem Unterschied, daß das Polyurethan Ibi keine wirksamen Mengen an Carbodiimid-Gruppen trägt.

Entsprechend ist das Polyurethan Ibi üblicherweise aufgebaut aus

Ibi1) Diisocyanaten, die frei sind von Carbodiimid-StruktureinheiTen,

Ibi2) Diolen, von denen

Ibi2.1) 10 bis 100 mol-%, bezogen auf die Gesamtmenge der Diole (Ibi2), ein Molekulargewicht von 500 bis 5000 aufweisen, und

Ibi2.2) 0 bis 90 mol-%, bezogen auf die Gesamtmenge der Diole (Ibi2), ein Molekulargewicht von 60 bis 500 g/mol aufweisen,

Ibi3) von den Monomeren (Ibi1) und (Ibi2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ibi4) gegebenenfalls weiteren von den Monomeren (Ibil) bis (Ibi3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ibi5) gegebenenfalls von den Monomeren (Ibi1) bis (Ibi4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Als Aufbaukomponenten (Ibi1) kommen insbesondere die als (Ia1.2) bezeichneten Verbindungen in Betracht, als Aufbaukomponenten (Ib2) die als (Ia2), als Aufbaukomponenten (Ibi3) die als (Ia3), als Aufbaukomponentenkommen (Ibi4) die als (Ia4), und als Aufbaukomponentenkommen (Ibi 5) die als (Ia5) bezeichneten Verbindungen.

Das Carbodiimid Ibii trägt im wesentlichen keine hydrophilen Gruppen, die die Wasserdispergierbarkeit bewirken, d.h. es trägt im wesentlichen keine ionischen Gruppen oder hydrophile Polyalkylenoxidreste, wie sie die Monomere Ia3 bzw. Ibi3 tragen. Geeignete Carbodiimide Ibii sind beispielsweise solche der allgemeinen Formel Ibii1

$$R^d - \left( R^c - N = C = N - R^c \right)_m - R^d \qquad \text{Ibii1}$$

mit

n: einer Zahl von 2 bis 20

$R^c$: wie bei der allgemeinen Formel Ia1.1.1 definiert

$R^d$: $-NH_2$

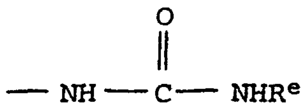

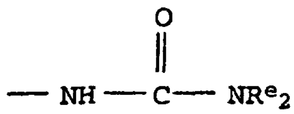

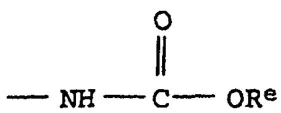

$-N=C=N\ N-R^e$

und $R^e$ unabhängig von einander $C_1$- bis $C_{20}$- Alkyl, $C_5$- bis $C_{12}$-Cycloalkyl, $C_6$- bis $C_{20}$-Aryl oder $C_7$- bis $C_{20}$- Aralkyl bedeutet, wobei 1 bis 4 Wasserstoffatome der Reste $R^e$ durch gegenüber Carbodiimidgruppen inerten Substituenten substituiert sein können.

Unter diesen Verbindungen sind solche der allgemeinen Formeln Ibii2 und Ibii3 bevorzugt

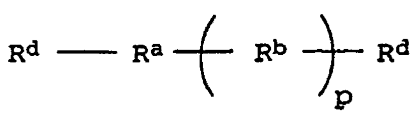 Ibii2

wobei $R^a$, $R^b$ und $R^d$ die in den Formeln Ia1.1.2 und Ibii1 angegebene Bedeutung hat und p für eine Zahl von 2 bis 20 steht.

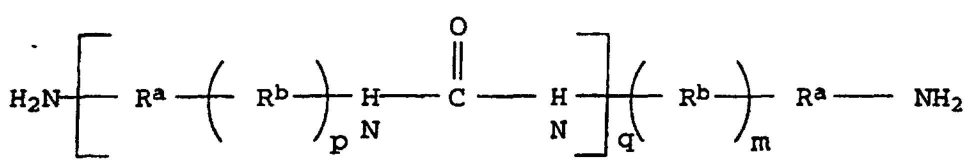 Ibii3

wobei $R^a$ und $R^b$ die in der Formel Ia1.12 angegebene Bedeutung hat, p für eine Zahl von 2 bis 20 und q für eine Zahl von 1 bis 10 steht.

Die Carbodiimide Ibii mit endständigen Harnstoff- oder Urethangruppen lassen sich beispielsweise durch Umsetzung von Verbindungen der Formel Ial.1.1 mit den entsperechenden Alkoholen oder Aminen herstellen.

Derartige Verbindungen sind bekannt und beispielsweise in der EP-A-628 541 beschrieben.

Die Carbodiimide Ibii mit endständigen Gruppen des Typs -N=C=N-$R^e$ sind erhältlich, indem man Verbindungen der Formel Ia1.1.1 mit den entsprechenden Monoisocyanaten kondensiert oder indem man die Diisocyanate, aus denen man die Verbindungen der Formel Ia1.1.1. aufbaut gemeinsam mit den Monoisocyanaten cocondensiert. Bevorzugt sind Phenylisocyanat, Cyclohexylisocyanat oder m-Isopropenyl-alpha-alpha-dimethylbenzylisocyanat (TMI).

Die Herstellung einer wässerigen Dispersion, die eine disperse Phase I enthält, in der das Polyurethan Ibi

und das Carbodiimid Ibii in Form einer physikalischen Mischung vorliegen, kann beispielsweise so erfolgen wie die Herstellung der Polyurethane Ia, die ein hydrophobes Hilfsmittel enthalten. Das bedeutet, daß man das Carbodiimid Ibii, sofern es keine gegenüber Isocyanaten reaktiven Gruppen wie alkoholische Hydroxy- oder primäre und sekundäre Aminogruppen trägt, zu einem beliebigen Zeitpunkt der Reaktionsmischung, aus der das Polyurethan Ibi gebildet wird, hinzufügen kann mit der Maßgabe, daß die Zumischung vor der Dispergierung des Polyurethans Ibi in Wasser erfolgt. Trägt das Carbodiimid Ibii gegenüber Isocyanaten reaktive Gruppen erfolgt die Zugabe jedoch erst dann, nachdem die Reaktionsmischung ausreagiert ist, d.h. praktisch keine NCO-Gruppen mehr enthält.

Weiterhin ist es möglich, anstelle der Carbodiimide Ibii die Monomere Ia1.1 einzusetzten, vorausgesetzt, daß deren Zugabe erfolgt, nachdem die Reaktionsmischung aus den Monomeren Ibi1 bis Ibi5 ausreagiert ist. In diesem Fall reagieren die Isocyanatgruppen der Monomere Ia1.1 mit Wasser zu Aminogruppen ab und gegebenfalls reagieren diese Aminogruppen mit weiteren Isocyanatgruppen weiterer Moleküle der Monomere Ia1.1 unter Bildung von Harnstoffgruppen zu kettenverlängerten Molekülen.

Als Polymer (P), das in der dispersen Phase (P.II) enthalten ist, kommen praktisch alle filmbildenden Polymerisate in Betracht, die Carboxylgruppen tragen.

Besonders bevorzugt sind solche erfindungsgemäßen wässerigen Dispersionen, bei denen die Phase (P.II) im wesentliche gebildet wird aus

IIa) einem Polyurethan (IIa), das Carboxylgruppen und im wesentlichen keine Carbodiimid-Gruppen trägt oder

IIb) einem Polymer (IIb), welches abgleitet ist von

IIb1) 30 bis 99,9 Gew.-% Hauptmonomere ausgewählt aus $C_1$- bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

IIb2) 0,01 bis 20 Gew.-% einer Carbonsäure mit einer olefinischen Doppelbindung und

IIb3) von (IIbl) und (IIb2) verschiedenen radikalisch polymerisierbaren Monomeren oder

IIc) wasserdispergierbaren Polyester, der Carboxylgruppen trägt (Polymer IIc)

Im Zusammenhang mit den Polymeren (IIb) steht (Meth)acryl- verkürzend für Methacryl- oder Acryl-.

Damit die Polymere P.II eine disperse Phase P.II bilden, weisen die Polymere P.II im allgemeinen bei einer Temperatur von 25°C in der kohärenten wässrigen Phase der erfindungsgemäßen Dispersion eine Löslichkeit von weniger als 1 g/l auf.

Bevorzugt enthalten die Polyurethane (IIa) 0,01 bis 1, bevorzugt 0,1 bis 0,5 mol Carboxylgruppen pro kg Polyurethan (IIa). Besonders bevorzugt ist die Zahl der Carboxylgruppen im Polyurethan (IIa) und der der Carbodiimid-Struktureinheiten im Polyurethan (Ia) weitgehend äquivalent

Die Polyurethane (IIa) sind allgemein und bevorzugt aufgebaut aus

IIa1) Diisocyanaten, die frei sind von Carbodiimid-Struktureinheiten

IIa2) Diolen, von denen

IIa2.1) 10 bis 100 mol-%, bezogen auf die Gesamtmenge der Diole (IIa2), ein Molekulargewicht von 500 bis 5000 aufweisen, und

IIa2.2) 0 bis 90 mol-%, bezogen auf die Gesamtmenge der Diole (IIa2), ein Molekulargewicht von 60 bis 500 g/mol aufweisen,

IIa3) von den Monomeren (IIa1) und (IIa2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird, wobei es sich zumindest bei einem Teil der Monomere (IIa3) bei der hydrophilen Gruppe bzw. potentiell hydrophilen Gruppe um eine Carboxylgruppe oder eine potentille Carboxylgruppe handelt, die in der Lage ist, nach der Dispergierung des Polyurethans im sauren wässerigen Milieu spontan zu einer Carboxylgruppe zu reagieren.

IIa4) gegebenenfalls weiteren von den Monomeren (IIa1) bis (IIa2) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

IIa5) gegebenenfalls von den Monomeren (IIa1) bis (IIa4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Als Aufbaukomponenten (IIa1) kommen insbesondere die als (Ia1.2) bezeichneten Verbindungen in Betracht, als Aufbaukomponenten (IIa2) die als (Ia2), als Aufbaukomponenten (IIa3) die als (Ia3), als Aufbaukomponentenkommen (IIa4) die als (Ia4), und als Aufbaukomponentenkommen (IIa5) die als (Ia5) bezeichneten Verbindungen. Als Aufbaukomponenten (IIa1) kommen insbesondere die als (Ia1.2) bezeichneten Verbindungen in Betracht, als Aufbaukomponenten (IIa2) die als (Ia2), als Aufbaukomponenten (IIa3) die als (Ia3), als Aufbaukomponentenkommen (IIa4) die als (Ia4), und als Aufbaukomponentenkommen (IIa5) die als (Ia5) bezeichneten Verbindungen. Bei den Aufbaukomponenten (IIa3) ergibt sich jedoch im Unterschied zu denen als (Ia3) bezeichneten die Besonderheit, daß es sich zumindest bei einem Teil der Monomere (IIa3) bei der hydrophilen Gruppe bzw. potentiell hydrophilen Gruppe um eine Carboxylgruppe oder eine potentielle Carboxylgruppe handeln muß, die in der Lage ist, nach der Dispergierung des Polyurethans im wässerigen Milieu spontan zu einer Carboxylgruppe zu reagierten.

Unter potentiellen Carboxylgruppen sind als z.B. als Salze vorliegende Carboxylatgruppen, die in Wasser zumindest teilweise protoniert werden, zu verstehen sowie beispielsweise Carbonsäureanhydridgruppen, die in Wasser hydrolysiert werden. Das gewünschte Verhältnis Carboxylgruppen zu Carboxylaten läßt sich besonders einfach nach der Dispergierung einstellen, indem man den pH-Wert der Dispersion gezielt verändert, z.B. wie es in der DE-A-4300162 beschrieben ist, oder indem man vor der Dispergierung und nach dem Aufbau des Polyurethans (IIa) Lauge oder Säure zugibt.

Bevorzugt sind solche erfindungsgemäßen Dispersionen, wobei die Phase (P.I) im wesentliche gebildet wird aus einem Polyurethan (Ia), wobei es sich bei den hydrophilen Gruppen der Aufbaukomponente (Ia3) um Sulfonatgruppen handelt, und wobei die Phase (P.II) im wesentliche gebildet wird aus einem Polyurethan (IIa), wobei es sich bei der hydrophilen Gruppe der Aufbaukomponente (IIa3) um Carboxylgruppen in Mischung mit Sulfonatgruppen, die teilweise in Form ihrer Ammonium- oder Alkalisalze vorliegen, handelt.

Die Polymere (IIb) sind bevorzugt aus folgenden Monomeren aufgebaut.

Als Monomere (IIb1) zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, alpha- und p-Methylstyrol, alpha-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren (IIb1) werden auch vorzugsweise im Gemisch eingesetzt.

Vinylaromatische Verbindungen wie Styrol werden z.B. häufig im Gemisch mit $C_1$-$C_{20}$-Alkyl(meth)acrylaten, insbesondere mit $C_1$-$C_8$-Alkyl(meth)acrylaten, oder nicht aromatischen Kohlenwasserstoffen wie Isopren oder vorzugsweise Butadien eingesetzt.

Als Monomere (IIb2) kommen vorzugsweise (Meth)acrylsäure oder Maleinsäure in Betracht.

Als Monomere (IIb3) kommen z.B. in Betracht: Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl-(meth)acrylat oder Acrylsäureester von heterocyclischen Alkoholen wie Furfuryl(meth)acrylat genannt.

Darüber hinaus kommen als Monomer (IIb3) noch Monomere mit Aminooder Amidgruppen wie (Meth)acrylamid, sowie deren am Stickstoff mit $C_1$-$C_4$-Alkyl substituierten Derivate, in Betracht.

Von Bedeutung als Monomere (IIb3) sind insbesondere hydroxyfunktionelle Monomere, z.B. (Meth)acrylsäure-$C_1$-$C_{15}$-alkylester, welche durch ein oder zwei Hydroxygruppen substituiert sind. Insbesondere von Bedeutung als hydroxyfunktionelle Comonomere sind (Meth)acrylsäure-$C_2$-$C_8$- hydroxyalkylester, wie n-Hydroxyethyl-, n-Hydroxypropyl- oder n-Hydroxybutyl(meth)acrylat.

Die Herstellung des Polymers (IIb) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden. Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan, sie können z.B. in Mengen von 0 bis 0,5 Gew.-%, bezogen auf das Copolymerisat, zusätzlich eingesetzt werden.

Die Art und Menge der Comonomeren wird vorzugsweise so gewählt, daß das erhaltene Copolymerisat eine Glasübergangstemperatur von -60 und +140°C, vorzugsweise -60 und +100°C aufweist. Die Glasübergangstemperatur des Copolymerisats wird durch Differentialthermoanalyse oder Differential Scanning Calorimetrie nach ASTM 3418/82, bestimmt.

Das zahlenmittlere Molekulargewicht $M_n$ beträgt vorzugsweise $10^3$ bis $5 \cdot 10^6$, besonders bevorzugt $10^5$ bis $2 \cdot 10^6$ (bestimmt durch Gelpermeationschromatographie mit Polystyrol als Standard).

Die wasserdispergierbaren Polyester, die Carboxylgruppen tragen (Polymer d), sind beispielsweise aus Encyclopedia of polymer science and engineering, John Wiley & Sons, second edition, volume 12, Seiten 300 bis 313 bekannt.

Geeignet sind beispielsweise Polyester, die aus Verbindungen der allgemeine Formel (Ia3.1) und den Aufbaukomponenten der Polyesterpolyole, die zum Aufbau der Polyurethane (Ia) verwendet werden (Aufbaukomponente a2.1) hergestellt sind.

Besonders einfach lassen sich die erfindungsgemäßen Dispersionen herstellen, indem man Dispersionen, die die dispersen Phasen (I) und (II) getrennt enthalten, herstellt und sie anschließend miteinander vermischt. Die Vermischung ist unkritisch und kann beispielsweise so vorgenommen werden, daß man eine Dispersion in die andere einrührt. Die Vermischung kann zu einem beliebigen Zeitpunkt vor deren Anwendung erfolgen.

Die erfindungsgemäßen Polyurethandispersionen können weitere wasseremulgierbare oder -dispergierbare Harze, wie Polyurethane, Polyester-, Epoxyd- oder Alkydharze sowie handelsübliche Hilfsund Zusatzstoffe wie Treibmittel, Entschäumer, Emulgatoren, Verdickungsmittel und Thixotropiermittel, Farbmittel wie Farbstoffe und Pigmente enthalten. Üblicherweise enthalten die erfindungsgemäßen Dispersionen jedoch keine wirksamen Mengen an Melamin, Kaolin oder Flammschutzmittel.

Sie eignen sich sich beispielsweise zum Verkleben oder Beschichten unterschiedlicher Substrate wie Holz, Metall, Kunststoffen, Papier, Leder oder Textil, für die Imprägnierung von Textilien sowie für die Herstellung von Formkörpern und Druckfarben.

Die Verarbeitung der erfindungsgemäßen Polyurethandispersionen kann dabei nach den in der Klebstoff, Leder- oder Lackindustrie allgemein üblichen Verfahren erfolgen, also indem man die Dispersionen auf das Substrat sprüht walzt oder rakelt und anschließend trocknet.

Für den Fall der Verarbeitung als Klebstoff werden die beschichteten Werkstücke entweder vor dem Trocknen des Dispersionsfilms oder nach dem Trocknen mit einem anderen Werkstück bevorzugt unter Anwendung von Druck zusammengefügt.

Besonders feste Klebstoffverbunde erhält man, wenn man Werkstücke, die mit einem getrockneten Klebstofffilm versehen sind, unmittelbar vor, während oder nach dem Zusammenfügen auf eine Temperatur von ca. 50 bis 100°C erwärmt.

Die nach diesen Methoden hergestellten Klebstoffverbunde zeichnen sich insbesondere dadurch aus, daß sie lagerbeständig sind und sich mit Ihnen Verklebungen mit einer hohen Wärmestandfestigkeit herstellen lassen.

Experimenteller Teil

| Abkürzungen: | |
|---|---|
| TI = | Teile |
| CDI = | Carbodiimidgruppen |
| OHZ = | Hydroxylzahl |
| TDI = | Toluylendiisocyanat |
| HDI = | Hexamethylendiisocyanat |
| DBTL = | Dibutylzinndilaurat |
| DMPA = | Dimethylolpropionsäure |
| VE-Wasser = | Entiontes Wasser |
| RT = | Raumtemperatur |

In den Beispielen wurde das Carbodiimid der folgenden Formel verwendet,

$$OCN\text{-}(R^c\text{-}N{=}C{=}N)_n\text{-}R^c\text{-}NCO \qquad (Ia1.1.1)$$

bei dem m im statistischen Mittel ungefähr 4 bedeutet.

Die Viskositäten der Dispersionen wurden bei einer Temperatur von 20°C und einer Schergeschwindigkeit von $250^{s-1}$ mit einem Rotations-Rheometer mit konzentrischen Zylindern (Spindeldurchmesser 38,7 mm, Becherdurchmesser: 42,0 mm) vermessen.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = \frac{\text{IntensitätDisp.x } 100}{\text{IntensitätWasser}}$$

Bestimmung des K-Wertes

Der K-Wert ist ein Maß für das Molekulargewicht eines Polymers und wurde nach der Methode ermittelt, wie sie in Kirk-Othmer, Encyclopedia of Chemical Technology, 3 rd Edition, Verlag John Wiley & Sons, Inc., volume 23, S. 967 beschrieben ist.

A Herstellung der Dispersionen
A1 Herstellung der Ausgangsdispersionen
A1.1 Herstellung der Ausgangsdispersionen des Typs (I)
A1.1.1 Herstellung der Ausgangsdispersionen des Typs (Ia)

Dispersion Ia1: Dispersion mit Carbodiimid

542,9 g eines Polyesters aus Adipinsäure, Neopentylgylkol und Hexandiol (OHZ=56), 0,1 g DBTL und 36,6 g Butandiol-1,4 wurden in 92,2 g Aceton mit 58,6 g TDI 1 h bei 65°C umgesetzt. Dann wurden 88,3 g eines NCO term. Carbodiimids mit 8% NCO und 15 % CDI in 100 g Aceton zugesetzt. Nach 10 min wurden 56,5 g HDI zudosiert und 153 min bei 65°C gerührt. Es wurde mit 756 g Aceton verdünnt und auf 50°C abgekühlt. Der NCO-Gehalt beträgt 0,38 %. Es wurde mit 33,8 g einer 50%igen wässrigen Lösung des Aminoethyl-aminoethansulfonsäureNa-Salzes kettenverlängert und mit 1200 g VE-Wasser dispergiert. Das Aceton wurde im Vakuum bei Temperaturen bis 43°C abdestilliert und der Feststoffgehalt auf 40 % eingestellt.
Analysenwerte: LD: 69 Visk.: 32 mPas K-Wert: 51 pH: 8,8

Dispersion Ia2: Dispersion mit Carbodiimid

563.2 g eines Polyesters aus Adipinsäure, Neopentylgylkol und Hexandiol (OHZ=56), 0,1 g DBTL und 38 g Butandiol-1,4 wurden in 191,4 g Aceton mit 63,4 g TDI 1 h bei 62°C umgesetzt. Dann wurden 57,3 g eines NCO

terminierten Carbodiimids mit 8% NCO und 15% CDI in 100 g Aceton zugesetzt, nach 10 min wurden 61,2 g HDI zudosiert und 139 min bei 65°C gerührt. Es wurde mit 756 g Aceton verdünnt und auf 50°C abgekühlt. Der NCO-Gehalt betrug 0,41 %. Es wurde mit 33,8 g einer 50%igen Lösung des Aminoethyl-aminoethansulfonsäure Na-Salzes kettenverlängert und mit 1200 g VE-Wasser dispergiert. Das Aceton wird im Vakuum bei Temperaturen bis 43°C abdestilliert und der Feststoffgehalt auf 40 % eingestellt.
Analysenwerte: LD: 78 Visk.: 46 mPas K-Wert: 58 pH: 8,3

Dispersion Ia3: Dispersion mit Carbodiimid

552.6 g eines Polyesters aus Adipinsäure, Neopentylgylkol und Hexandiol (OHZ=56), 0,1 g DBTL und 37,3 g Butandiol-1,4 wurden in 191,4 g Aceton mit 60,9 g TDI 1 h bei 65°C umgesetzt. Dann wurden 73,5 g eines NCO term Carbodiimids mit 8 % NCO und 15 % CDI in 100 g Aceton zugesetzt. Nach 10 min wurden 58,8 g HDI zudosiert und 140 min bei 65°C gerührt. Es wurde mit 756 g Aceton verdünnt und auf 50°C abgekühlt. Der NCO-Gehalt betrug 0,41 %. Es wurde mit 33,8 g einer 50 %igen Lösung des Aminoethyl-aminoethansulfonsäureNa-Salzes kettenverlängert und mit 1200 g VE-Wasser dispergiert. Das Aceton wurde im Vakuum bei Temperaturen bis 43°C abdestilliert und der Feststoffgehalt auf 40 % eingestellt.
Analysenwerte: LD: 80 Visk.: 50 mPas K-Wert: 53 pH: 7,8

A1.1.2 Herstellung der Ausgangsdispersionen des Typs Ib

Dispersion Ib1

600,6 g eines Polyesters aus Adipinsäure, Neopentylgylkol und Hexandiol (OHZ=56), 0,15 g DBTL und 40,5 g Butandiol-1,4 wurden in 191,4 g Aceton mit 72.2 g TDI 1 h bei 69°C umgesetzt. Dann wurden 69,8 g HDI zudosiert und 147 min bei 69°C gerührt. Es wurde mit 765,8 g Aceton verdünnt und auf 50°C abgekühlt. Der NCO-Gehalt betrug 0,40%. Es wurde mit 33,8 g einer 50%igen Lösung des Aminoethyl-aminoethansulfonsäureNa-Salzes kettenverlängert, dann 50 g eines NCO term. Carbodiimids mit 8% NCO und 15% CDI in 100 g Aceton zugesetzt und mit 1200 g VE-Wasser dispergiert. Das Aceton wurde im Vakuum bei Temperaturen bis 43°C abdestilliert und der Feststoffgehalt auf 40% eingestellt.
Analysenwerte: LD: 84,5 Visk.: 29mPas K-Wert: 62 pH: 6,9

Dispersion Ib2

591,1 g eines Polyesters aus Adipinsäure, Neopentylgylkol und Hexandiol (OHZ=56), 0,25 g DBTL und 39,9 g Butandiol-1,4 wurden in 189,8 g Aceton mit 74 g TDI 90 min bei 68°C umgesetzt. Dann wurden 71,5 g HDI zudosiert und 104 min bei 68°C gerührt. Es wurde mit 759 g Aceton verdünnt und auf 50°C abgekühlt. Der NCO-Gehalt betrug 0,54%. Es wurde mit 47,3 g einer 50%igen Lösung des Aminoethyl-aminoethansulfonsäureNa-Salzes kettenverlängert, dann 80 g eines NCO term. Carbodiimids mit 8% NCO und 15% CDI in 100 g Aceton zugesetzt und mit 1200 g VE-Wasser dispergiert. Das Aceton wurde im Vakuum bei Temperaturen bis 43°C abdestilliert und der Feststoffgehalt auf 40% eingestellt.
Analysenwerte: LD: 86,7 Visk.: 38,6mPas K-Wert: 58 pH: 6,9

Dispersion Ib3

600,6 g eines Polyesters aus Adipinsäure, Neopentylgylkol und Hexandiol (OHZ=56), 0,25 g DBTL und 40,5 g Butandiol-1,4 wurden in 191,4 g Aceton mit 72,2 g TDI 90 min bei 65°C umgesetzt. Dann wurden 69,8 g HDI zudosiert und 77 min bei 65°C gerührt. Es wurde mit 765 g Aceton verdünnt und auf 50°C abgekühlt. Der NCO-Gehalt betrug 0,48%. Es wurde mit 33,8 g einer 50%igen Lösung des Aminoethyl-aminoethansulfonsäureNa-Salzes kettenverlängert, dann 30 g eines NCO term. Carbodiimids mit 8% NCO und 15% CDI in 100 g Aceton zugesetzt und mit 1200 g VE-Wasser dispergiert. Das Aceton wurde im Vakuum bei Temperaturen bis 43°C abdestilliert und der Feststoffgehalt auf 40% eingestellt.
Analysenwerte: LD: 82 Visk.: 32,6 mPas K-Wert: 55 pH: 7,5

Dispersion V.1 (zum Vergleich): Dispersion mit Carbodiimid nach Dispergierung vor Destillation

600,6 g eines Polyesters aus Adipinsäure, Neopentylgylkol und Hexandiol (OHZ=56), 0,15 g DBTL und 40,5 g Butandiol-1,4 wurden in 191,4 g Aceton mit 72,2 g TDI 1 h bei 65°C umgesetzt. Dann wurden 69,8 g HDI zudosiert und 199 min bei 65°C gerührt, dabei mit 100 g Aceton verdünnt. Es wurde mit 765,8 g Aceton verdünnt und auf 50°C

abgekühlt. Der NCO-Gehalt betrug 0,41 %. Es wurde mit 33,8 g einer 50 %igen Lösung des Aminoethyl-aminoethansulfonsäureNa-Salzes kettenverlängert und mit 1200 g VE-Wasser dispergiert. Dann wurden 50 g eines NCO term. Carbodiimids mit 8% NCO und 15 % CDI in 100 g Aceton zugesetzt . Das Aceton wurde im Vakuum bei Temperaturen bis 43°C abdestilliert und der Feststoffgehalt auf 40 % eingestellt.
Analysenwerte: LD: 73.4 Visk.: 25mPas K-Wert: 59 pH: 7.0

A1.2 Herstellung der Ausgangsdispersionen des Typs (II)

Dispersion IIa1: Dispersion mit Carbonsäure

515,5 g eines Polyesters aus Adipinsäure, Neopentylgylkol und Hexandiol (OHZ=56), 0,5 g DBTL, 34,5 g DMPA und 34,8 g Butandiol-1,4 werden in 187,3 g Aceton mit 92,3 g TDI 1 h bei 65°C umgesetzt. Dann wurden 89,2 g HDI zugesetzt und 177 min bei 65°C gerührt. Es wurde mit 749,3 g Aceton verdünnt und auf 30°C abgekühlt. Der NCO-Gehalt betrug 0,91 %. Es wurde mit 67,6 g einer 50%igen Lösung des Aminoethyl-aminoethansulfonsäureNa-Salzes kettenverlängert und mit 1200 g VE-Wasser dispergiert. Das Aceton wurde im Vakuum bei Temperaturen bis 43°C abdestilliert und der Feststoffgehalt auf 40% eingestellt.
Analysenwerte: LD: 84 Visk.: 179 mPas K-Wert: 40 pH: 5,9

Dispersion IIb1:

Dispersion aus Butylacrylat, Acrylnitril und Acrylsäure mit dem Handelsnamen Acronal ® A 378.

A1.3 Herstellung einer Dispersion des Standes der Technik Typ 3 ohne Caboxyl- oder Carbodiimidgruppen

Dispersion V.2 ohne Carbodiimid und ohne DMPA

588,7 g eines Polyesters aus Adipinsäure, Neopentylgylkol und Hexandiol (OHZ=56), 0,1 g DBTL, und 39,7 g Butandiol-1,4 wurden in 189,7 g Aceton mit 74,4 g TDI 1 h bei 65°C umgesetzt. Dann wurden 71,9 g HDI zugesetzt und 155 min bei 65°C gerührt. Es wird mit 757,5 g Aceton verdünnt und auf 30°C abgekühlt. Der NCO-Gehalt betrug 0,65 %. Es wurde 50,7 g einer 50 %igen Lösung des Aminoethyl-aminoethansulfonsäureNa-Salzes kettenverlängert und mit 1200 g VE-Wasser dispergiert. Das Aceton wurde im Vakuum bei Temperaturen bis 43°C abdestilliert und der Feststpffgehalt auf 40 % eingestellt.
Analysenwerte: LD: 67 Visk.: 27 mPas K-Wert: 52,2 pH: 7,9

A.2 Herstellung der latent vernetzenden Dispersionen und der Vergleichsbeispiele

Die Dispersionen werden einer Hartfaser/PVC Verklebung unterworfen und die Wärmestandfestigkeit bestimmt.
Dispersion Ia1-IIa1.: 50 Tl der Dispersion Ia1 wurden mit 50 Tl der Dispersion IIa1 gemischt .
Dispersion Ia2-IIa1: 50 Tl der Dispersion Ia2 wurden mit 50 Tl der Dispersion IIa1 gemischt.
Dispersion Ia2-IIb1: 45 Tl. der Dispersion Ia2 wurde mit 60 Tl. der Dispersion IIb1 gemischt.
Dispersion Ia3-IIa1: 50 Tl der Dispersion Ia3 wurden mit 50Tl der Dispersion IIa1 gemischt.
Dispersion Ib1-IIa1.: 250 Tl der Dispersion I.1 wurden mit 298 Tl der Dispersion IIal gemischt.
Dispersion Ib2-IIa1: 250 Tl der Dispersion Ib2 wurden mit 297,4 50Tl der Dispersion IIa1 gemischt.
Beispiel V.1-IIa1 (V): 250 Tl. der Dispersion I.4 wurde mit 299 Tl. der Dispersion IIa1 gemischt.
Dispersion V.2-Isocyanat: Die Dispersion III.1 wurde mit 7.5 % Desmodur ® DA, einem aliphatischen Polyisocyanat, versetzt

B. Durchführung der anwendungstechnischen Prüfungen

Statische Schälfestigkeit in der Wärme-Hartfaser/Weich-PVC

Die Dispersionen werden mit Collacral ® VL auf ca. 300 mPas verdickt.

B.1 Vorbereitung der Prüfkörper

Die Prüfungen wurden nach folgender Prüfvorschrift durchgeführt

| | |
|---|---|
| Substrat: | Hartfaserplatte/PVC-Folie, Typ: Benecke 577/E28 |
| Abmessung: | 200 x 200 mm |
| Verklebungsfläche: | 200 x 170 mm (in 5 Prüfstreifen zu 30 mm unterteilt) |
| Auftrag: | 2 mm Drahtrakel<br>auf Hartfaserplatte in Längsrichtung |
| Trocknung: | 3 min bei 60°C |
| Verklebungsweise: | Warmverpressung bei 80 °C nur PVC-Seite |
| Preßdruck: | 0,1 $N/mm^2$ |
| Preßdauer: | 30 s |
| Probenlagerung: | 1 Tag bei RT |
| Prüfbelastung: | 300 g pro 30 mm breitem Prüfstreifen |
| Abschälwinkel: | 180° |
| Anzahl der Proben: | 1 Platte sind 5 Proben |

B.2 Belastungsprüfung und Auswertung

Die Prüfungen wurden nach folgender Prüfvorschrift durchgeführt

Nach dem Kleberauftrag, der Trocknung und der Pressung werden aus der so hergestellten Fläche 30 mm breite Streifen mit 10 mm Zwischenraum geschnitten. Dabei wird lediglich die Folie durchtrennt, die Hartfaserplatte bleibt unbeschädigt. Die 10 mm breiten Zwischenstreifen werden entfernt und an die 30 mm breiten Prüfstreifen je 300 g Gewicht angeklemmt.

Die Prüfung beginnt bei 40°C. Nach jeweils 30 Minuten wird die Temperatur um 10°C erhöht. In der Aufheizphase, die 15 Minuten beträgt, sind die Prüfstreifen nicht belastet.

Beurteilung des Bruchbildes:

K= Trennung in der Klebeschicht ohne Ablösung von einem Werkstoff (Kohäsionsbruch)

C Prüfergebnisse

Die Prüfergebnisse sind in Tabelle 1 zusammengefaßt

Tabelle 1

| Dispersion | WSF[°C] | Bruchbild |
|---|---|---|
| Ia1-IIa1 | 5 x >120 | K |
| Ia2-IIa1 | 5 x > 120 | K |
| Ia2-IIb1 | 1 x 80, 4 x > 120 | K |
| Ia3-IIa1 | 5 x > 120 | K |
| Ib1-IIa1 | 5 x >120 | K |
| Ib2-IIa1 | 5 x >120 | K |
| | | |
| Ia1 (V) | 5 x 70 | K |
| Ia2 (V) | 5 x 90 | K |

Tabelle 1 (fortgesetzt)

| Dispersion | WSF[°C] | Bruchbild |
|---|---|---|
| Ia3 (V) | 5 x 80 | K |
| Ib1 (V) | 5 x 90 | K |
| Ib2 (V) | 4 x 90, 1 x 100 | K |
| Ib3 (V) | 5 x 100 | K |
| V.1 (V) | 5 x 80 | K |
| IIa1 (V) | 5 x < 50 | K |
| V.1-IIa1 (V) | 5 x 100 | K |
| V.2 (V) | 5 x <90°C | K |
| V.2 + Isocyanat (V) | 5 x 120°C | K |
| "V" bedeutet Vergleichsversuch | | |

**Patentansprüche**

1. Latent vernetzende wässerige Polyurethandispersionen, enthaltend

I) eine disperse Phase (P.I), enthaltend

Ib) eine physikalische Mischung aus

Ibi) einem Polyurethan (Ibi), das hydrophile Gruppen, die die Wasserdispergierbarkeit bewirken, trägt und im wesentlichen keine Carbodiimid oder Carboxylgruppen trägt, und

Ibii) einem Carbodiimid (Ibii), das im wesentlichen keine hydrophilen Gruppen, die die Wasserdispergierbarkeit bewirken, trägt.

II) eine disperse Phase (P.II), enthaltend ein sonstiges Polymer (II), das Carboxylgruppen und im wesentlichen keine Carbodiimid-Gruppen trägt.

2. Latent vernetzende wässerige Polyurethandispersionen, enthaltend

I) eine disperse Phase (P.I), die im wesentlichen gebildet wird aus einem Polyurethan (Ia), das aufgebaut ist aus

Ia1) Diisocyanaten, die

Ia1.1) Carbodiimid-Struktureinheiten enthalten und gegebenenfalls solche,

Ia1.2) die frei sind von Carbodiimid-Struktureinheiten,

Ia2) Diolen, von denen

Ia2.1) 10 bis 100 mol-%, bezogen auf die Gesamtmenge der Diole (Ia2), ein Molekulargewicht von 500 bis 5000 aufweisen, und

Ia2.2) 0 bis 90 mol-%, bezogen auf die Gesamtmenge der Diole (Ia2), ein Molekulargewicht von 60 bis 500 g/mol aufweisen,

Ia3) von den Monomeren (Ia1) und (Ia2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ia4) gegebenenfalls weiteren von den Monomeren (Ia1) bis (Ia3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ia5) gegebenenfalls von den Monomeren (Ia1) bis (Ia4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**3.** Wässerige Dispersionen nach Anspruch 1 oder 2, wobei die Carbodiimid-Struktureinheiten in das Polyurethan (Ia) eingeführt werden über Polyisocyanate (Ia1) der allgemeinen Formel Ia1.1.1

$$OCN\text{-}(R^{c}\text{-}N{=}C{=}N)_{n}\text{-}R^{c}\text{-}NCO \qquad (Ia1.1.1)$$

in der $R^c$ für einen zweiwertigen, ggf. Harnstoff-, Urethan-, Ester-, und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständig Isocyanatgruppen trägt, erhalten wird, wobei bei Vorliegen von mehreren Resten $R^c$ im gleichen Molekül gleichzeitig auch unterschiedliche, der genannten Definition entsprechende Reste $R^c$ vorliegen können und
n für eine ganze oder (im statistischen Mittel) gebrochene Zahl von 1 bis 20, vorzugsweise von 2 bis 10, steht.

**4.** Wässerige Dispersionen nach Anspruch 1 bis 3, wobei die Carbodiimid-Struktureinheiten in das Polyurethan (Ia) eingeführt werden über Polyisocyanate (Ia1) der allgemeinen Formel Ia1.1.2

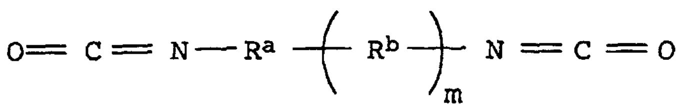

Ia1.1.2

mit

$R^a$: eine Gruppe der Formel Ia1.1.2.1

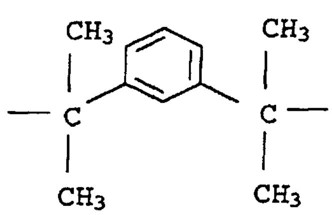

Ia1.1.2.1

$R^b$: eine Gruppe der Formel Ia1.1.2.2

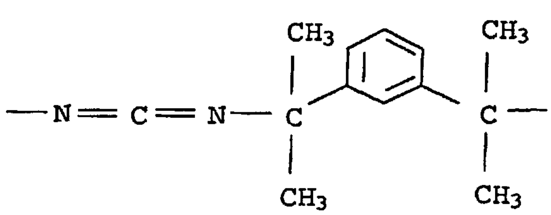

Ia1.1.2.2

und

m: eine Zahl von 1 bis 20

**5.** Wässerige Dispersionen nach den Ansprüchen 1 bis 4, wobei die Phase (P.I) im wesentlichen gebildet wird aus einem Polyurethan (Ia), das aufgebaut ist aus

Ia1) Diisocyanaten, die

Ia1.1) Carbodiimid-Struktureinheiten enthalten und gegebenenfalls solche,

Ia1.2) die frei sind von Carbodiimid-Struktureinheiten,

Ia2) Diolen, von denen

Ia2.1) 10 bis 100 mol-%, bezogen auf die Gesamtmenge der Diole (Ia2), ein Molekulargewicht von 500 bis 5000 aufweisen, und

Ia2.2) 0 bis 90 mol-%, bezogen auf die Gesamtmenge der Diole (Ia2), ein Molekulargewicht von 60 bis 500 g/mol aufweisen,

Ia3) von den Monomeren (Ia1) und (Ia2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ia4) gegebenenfalls weiteren von den Monomeren (Ia1) bis (Ia3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ia5) gegebenenfalls von den Monomeren (Ia1) bis (Ia4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**6.** Wässerige Dispersionen nach den Ansprüchen 1 bis 5, wobei das Polyurethan (Ibi), das aufgebaut ist aus

Ibi1) Diisocyanaten, die frei sind von Carbodiimid-Struktureinheiten,

Ibi2) Diolen, von denen

Ibi2.1) 10 bis 100 mol-%, bezogen auf die Gesamtmenge der Diole (Ibi2), ein Molekulargewicht von 500 bis 5000 aufweisen, und

Ibi2.2) 0 bis 90 mol-%, bezogen auf die Gesamtmenge der Diole (Ibi2), ein Molekulargewicht von 60 bis 500 g/mol aufweisen,

Ibi3) von den Monomeren (Ibi1) und (Ibi2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ibi4) gegebenenfalls weiteren von den Monomeren (Ibi1) bis (Ibi3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ibi5) gegebenenfalls von den Monomeren (Ibi1) bis (Ibi4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**7.** Wässerige Dispersionen nach den Ansprüchen 1 bis 5, wobei es sich bei dem Carbodiimid Ibii um eines der allgemeinen Formel Ibii1 handelt

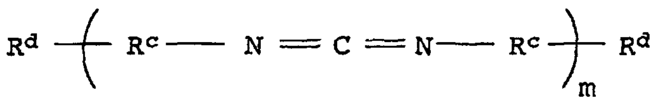

Ibii1

mit

n: einer Zahl von 2 bis 20

$R^c$: wie bei der allgemeinen Formel Ia1.1.1 definiert

$R^d$: $—NH_2$

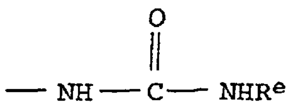

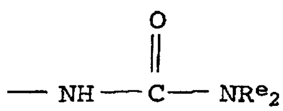

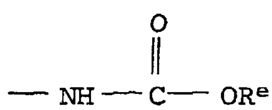

$— N{=}C{=}N — R^e$

und $R^e$ unabhängig von einander $C_1$- bis $C_{20}$- Alkyl, $C_5$bis $C_{12}$- Cycloalkyl, $C_6$- bis $C_{20}$-Aryl oder $C_7$- bis $C_{20}$-Aralkyl bedeutet, wobei 1 bis 4 Wasserstoffatome der Reste $R^e$ durch gegenüber Carbodiimidgruppen inerten Substituenten substituiert sein können.

**8.** Wässerige Dispersionen nach Anspruch 6, wobei es sich bei dem Carbodiimid Ibii1 um eines der allgemeinen Formel Ibii2 oder Ibii3 handelt

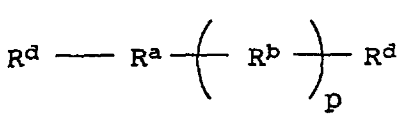

Ibii2

wobei $R^a$, $R^b$ und $R^d$ die in den Formeln Ia1.1.2 und Ibii1 angegebene Bedeutung hat und p für eine Zahl von 2 bis 20 steht oder
der allgemeinen Formel Ibii3

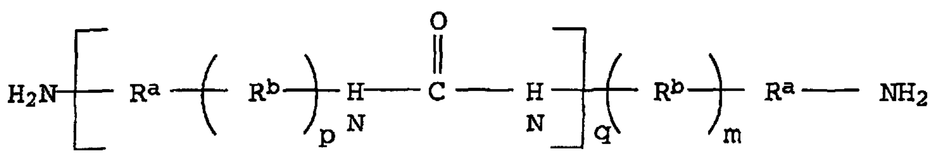

Ibii3

wobei $R^a$ und $R^b$ die in der Formel Ia1.1.2 angegebene Bedeutung hat, p für eine Zahl von 2 bis 20 und q für eine Zahl von 1 bis 10 steht.

**9.** Wässerige Dispersionen nach den Ansprüchen 1 bis 8, wobei die Phase (PII) im wesentlichen gebildet wird aus

IIa) einem Polyurethan (IIa), das Carboxylgruppen und im wesentlichen keine Carbodiimid-Gruppen trägt oder

IIb) einem Polymer (IIb), welches abgleitet ist von

II 30 bis 99,9 Gew.-% Hauptmonomere ausgewählt aus $C_1$bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

IIb2) 0,01 bis 20 Gew.-% einer Carbonsäure mit einer olefinischen Doppelbindung und

IIb3) von (IIb1) und (IIb2) verschiedenen radikalisch polymerisierbaren Monomeren oder

IIc) wasserdispergierbaren Polyester, der Carboxylgruppen trägt (Polymer IIc)

**10.** Wässerige Dispersionen nach Anspruch 9, wobei das Polyurethan (IIa) aufgebaut ist aus

IIa1) Diisocyanaten, die frei sind von Carbodiimid-Struktureinheiten

IIa2) Diolen, von denen

IIa2.1) 10 bis 100 mol-%, bezogen auf die Gesamtmenge der Diole (IIa2), ein Molekulargewicht von 500 bis 5000 aufweisen, und

IIa2.2) 0 bis 90 mol-%, bezogen auf die Gesamtmenge der Diole (IIa2), ein Molekulargewicht von 60 bis 500 g/mol aufweisen,

IIa3) von den Monomeren (IIa1) und (IIa2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird, wobei es sich zumindest bei einem Teil der Monomere (IIa3) bei der hydrophilen Gruppe bzw. potentiell hydrophilen Gruppe um eine Carboxylgruppe oder eine potentielle Carboxylgruppe handelt.

IIa4) gegebenenfalls weiteren von den Monomeren (IIa1) bis (IIa2) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

IIa5) gegebenenfalls von den Monomeren (IIa1) bis (IIa4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**11.** Wässerige Dispersionen nach den Anspruch 9, wobei die Phase (P.I) im wesentlichen gebildet wird aus einem Polyurethan Ia oder Ibi dessen Aufbaukomponente Ia3 bzw. Ibi3 Sulfonatgruppen trägt, und wobei die Phase (P. II) im wesentliche gebildet wird aus einem Polyurethan (IIa), dessen Aufbaukomponente (IIa3) Carboxylgruppen

trägt, die teilweise in Form ihrer Ammonium- oder Alkalisalze vorliegen.

**12.** Wässerige Dispersionen nach den Anspruch 9, wobei die Phase (P.II) im wesentliche gebildet wird aus einem Polymer (IIb), welches abgeleitet ist von $C_1$- bis $C_{20}$-Alkyl(meth)acrylaten und gegebenenfalls Acrylnitril als Monomere (IIb1) und (Meth)acrylsäure als Monomer (IIb2).

**13.** Verwendung der Dispersionen nach den Ansprüchen 1 bis 12 als Imprägnierungsmittel, Beschichtungsmittel oder Klebstoff.

**14.** Gegenstände aus Holz, Metall, Textil, Leder oder Kunststoff, die mit einer wässerigen Dispersion nach den Ansprüchen 1 bis 12 verklebt, imprägniert oder beschichtet sind.

**Claims**

**1.** A latent-crosslinking aqueous polyurethane dispersion comprising

I) a disperse phase (P.I) comprising

Ib) a physical mixture of

Ibi) a polyurethane (Ibi) which carries hydrophilic groups which make it dispersible in water but carries essentially no carbodiimide or carboxyl groups and

Ibii) a carbodiimide (Ibii) which carries essentially no hydrophilic groups which make it dispersible in water, and

II) a disperse phase (P.II) comprising another polymer (II) which carries carboxyl groups and essentially no carbodiimide groups.

**2.** A latent-crosslinking aqueous polyurethane dispersion comprising

I) a disperse phase (P.I) formed essentially of a polyurethane (Ia) which is composed of

Ia1) diisocyanates which

Ia1.1) comprise carbodiimide structural units, with or without those which

Ia1.2) are free of carbodiimide structural units,

Ia2) diols of which

Ia2.1) from 10 to 100 mol%, based on the overall amount of the diols (Ia2), have a molecular weight of from 500 to 5000, and

Ia2.2) from 0 to 90 mol%, based on the overall amount of the diols (Ia2), have a molecular weight of from 60 to 500 g/mol,

Ia3) monomers other than the monomers (Ia1) and (Ia2), which have at least one isocyanate group or at least one isocyanate-reactive group and also carry at least one hydrophilic group or a potentially hydrophilic group which makes the polyurethanes dispersible in water,

Ia4) if desired, further, polyfunctional compounds which are different from the monomers (Ia1) to (Ia3) and have reactive groups which are alcoholic hydroxyl, primary or secondary amino or isocyanate groups, and

Ia5) if desired, monofunctional compounds which are different from the monomers (Ia1) to (Ia4) and have a reactive group which is an alcoholic hydroxyl, primary or secondary amino or isocyanate group.

**3.** An aqueous dispersion as claimed in claim 1 or 2, where the carbodiimide structural units are introduced into the polyurethane (Ia) by way of polyisocyanates (Ia1) of the formula Ia1.1.1

$$OCN\text{-}(R^c\text{-}N{=}C{=}N)_n\text{-}R^c\text{-}NCO \qquad (Ia1.1.1)$$

where $R^c$ is a divalent hydrocarbon radical with or without urea, urethane, ester and/or ether groups as is obtained by removing the isocyanate groups from a simple organic isocyanate or from a prepolymer which contains urethane groups and possibly ether or ester groups and which is terminated by isocyanate groups; if there are two or more radicals $R^c$ in the same molecule, then different radicals $R^c$ conforming to the given definition may be present simultaneously; and
n is an integral or (on average) fractional number from 1 to 20, preferably from 2 to 10.

**4.** An aqueous dispersion as claimed in claims 1 to 3, where the carbodiimide structural units are introduced into the polyurethane (Ia) by way of polyisocyanates (Ia1) of the formula Ia1.1.2

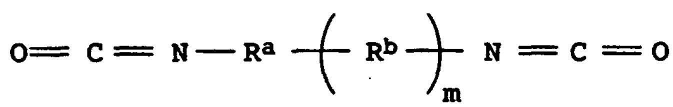

Ia1.1.2

where
$R^a$ is a group of the formula Ia1.1.2.1

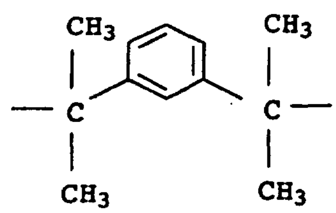

Ia1.1.2.1,

$R^b$ is a group of the formula Ia1.1.2

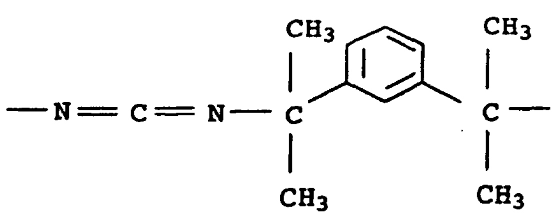

Ia1.1.2.2

and
m is a number from 1 to 20.

**5.** An aqueous dispersion as claimed in claims 1 to 4, where the phase (P.I) is formed essentially of a polyurethane (Ia) which is composed of

Ia1) diisocyanates which

Ia1.1) comprise carbodiimide structural units, with or without those which

Ia1.2) are free of carbodiimide structural units,

Ia2) diols of which

Ia2.1) from 10 to 100 mol%, based on the overall amount of the diols (Ia2), have a molecular weight of from 500 to 5000, and

Ia2.2) from 0 to 90 mol%, based on the overall amount of the diols (Ia2), have a molecular weight of from 60 to 500 g/mol,

Ia3) monomers other than the monomers (Ia1) and (Ia2), which have at least one isocyanate group or at least one isocyanate-reactive group and also carry at least one hydrophilic group or a potentially hydrophilic group which makes the polyurethanes dispersible in water,

Ia4) if desired, further, polyfunctional compounds which are different from the monomers (Ia1) to (Ia3) and have reactive groups which are alcoholic hydroxyl, primary or secondary amino or isocyanate groups, and

Ia5) if desired, monofunctional compounds which are different from the monomers (Ia1) to (Ia4) and have a reactive group which is an alcoholic hydroxyl, primary or secondary amino or isocyanate group.

**6.** An aqueous dispersion as claimed in claims 1 to 5, where the polyurethane (Ibi) is composed of

Ibi1) diisocyanates which are free of carbodiimide structural units,

Ibi2) diols of which

Ibi2.1) from 10 to 100 mol%, based on the overall amount of the diols (Ibi2), have a molecular weight of from 500 to 5000, and

Ibi2.2) from 0 to 90 mol%, based on the overall amount of the diols (Ibi2), have a molecular weight of from 60 to 500 g/mol,

Ibi3) monomers other than the monomers (Ibi1) and (Ibi2), which have at least one isocyanate group or at least one isocyanate-reactive group and also carry at least one hydrophilic group or a potentially hydrophilic group which makes the polyurethanes dispersible in water,

Ibi4) if desired, further, polyfunctional compounds which are different from the monomers (Ibi1) to (Ibi3) and have reactive groups which are alcoholic hydroxyl, primary or secondary amino or isocyanate groups, and

Ibi5) if desired, monofunctional compounds which are different from the monomers (Ibi1) to (Ibi4) and have a reactive group which is an alcoholic hydroxyl, primary or secondary amino or isocyanate group.

**7.** An aqueous dispersion as claimed in claims 1 to 5, where the carbodiimide Ibii is of the formula Ibii1

$$R^d - \left( R^c - N = C = N - R^c \right)_m - R^d \qquad \text{Ibii1}$$

where

n is a number from 2 to 20

$R^c$ is as defined for the formula Ia1.1.1

$R^d$ is $-NH_2$

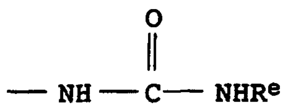

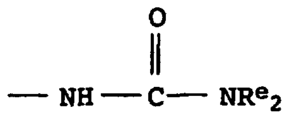

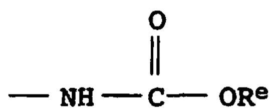

$$—N{=}C{=}N—R^e$$

and $R^e$ independently at each occurrence is $C_1$- to $C_{20}$-alkyl, $C_5$- to $C_{12}$-cycloalkyl, $C_6$- to $C_{20}$-aryl or $C_7$-to $C_{20}$-aralkyl, it being possible for 1 to 4 hydrogen atoms of the radicals $R^e$ to be substituted by substituents which are inert with respect to carbodiimide groups.

**8.** An aqueous dispersion as claimed in claim 6, where the carbodiimide Ibii1 is of the formula Ibii2 or Ibii3

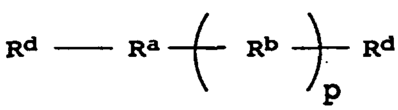 Ibii2

where $R^a$, $R^b$ and $R^d$ are as defined for the formulae Ia1.1.2 and Ibii1 and p is a number from 2 to 20 or of the formula Ibii3

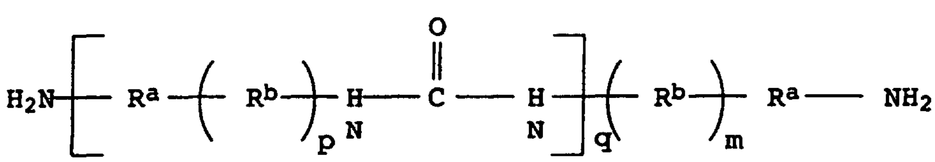 Ibii3

where $R^a$ and $R^b$ are as defined for the formula Ia1.1.2, p is a number from 2 to 20 and q is a number from 1 to 10.

**9.** An aqueous dispersion as claimed in claims 1 to 8, where the phase (PII) is formed essentially of

IIa) a polyurethane (IIa) which carries carboxyl groups and essentially no carbodiimide groups, or

IIb) a polymer (IIb) which is derived from

IIb1) from 30 to 99.9% by weight of principal monomers selected from $C_1$-$C_{20}$-alkyl (meth)acrylates, vinyl esters of $C_1$-$C_{20}$ carboxylic acids, vinylaromatic compounds having up to 20 carbons, ethylenically unsaturated nitriles, vinyl halides and aliphatic hydrocarbons having 2 to 8 carbons and 1 or 2 double bonds,

IIb2) from 0.01 to 20% by weight of a carboxylic acid having an olefinic double bond, and

IIb3) free-radically polymerizable monomers other than (IIb1) and (IIb2),

or

IIc) water-dispersible polyester which carries carboxyl groups (polymer IIc).

**10.** An aqueous dispersion as claimed in claim 9, where the polyurethane (IIa) is composed of

IIa1) diisocyanates which are free of carbodiimide structural units,

IIa2) diols of which

IIa2.1) from 10 to 100 mol%, based on the overall amount of the diols (IIa2), have a molecular weight of from 500 to 5000, and

IIa2.2) from 0 to 90 mol%, based on the overall amount of the diols (IIa2), have a molecular weight of from 60 to 500 g/mol,

IIa3) monomers other than the monomers (IIa1) and (IIa2), which have at least one isocyanate group or at least one isocyanate-reactive group and also carry at least one hydrophilic group or a potentially hydrophilic group which makes the polyurethanes dispersible in water, the hydrophilic group or potentially hydrophilic group of at least some of the monomers (IIa3) being a carboxyl group or a potential carboxyl group,

IIa4) if desired, further, polyfunctional compounds which are different from the monomers (IIa1) to (IIa2) and have reactive groups which are alcoholic hydroxyl, primary or secondary amino or isocyanate groups, and

IIa5) if desired, monofunctional compounds which are different from the monomers (IIa1) to (IIa4) and have a reactive group which is an alcoholic hydroxyl, primary or secondary amino or isocyanate group.

**11.** An aqueous dispersion as claimed in claim 9, where the phase (P.I) is formed essentially of a polyurethane Ia or Ibi whose structural component Ia3 or Ibi3 carries sulfonate groups and where the phase (P.II) is formed essentially of a polyurethane (IIa) whose structural component (IIa3) carries carboxyl groups, some of which are present in the form of their ammonium salts or alkali metal salts.

**12.** An aqueous dispersion as claimed in claim 9, where the phase (P.II) is essentially formed of a polymer (IIb) which is derived from $C_1$-$C_{20}$-alkyl (meth)acrylates with or without acrylonitrile as monomers (IIb1) and (meth)acrylic acid as monomer (IIb2).

**13.** The use of a dispersion as claimed in claims 1 to 12 as an impregnant, coating composition or adhesive.

**14.** An article made of wood, metal, textile, leather or plastic, adhesively bonded, impregnated or coated with an aqueous dispersion as claimed in claims 1 to 12.

## Revendications

**1.** Dispersions aqueuses de polyuréthanne à réticulation latente, contenant

I) une phase dispersée (P.I), contenant

Ib) un mélange physique,

Ibi) d'un polyuréthanne (Ibi), qui porte des groupes hydrophiles, qui provoquent la capacité de dispersion dans l'eau, et qui ne porte sensiblement pas de carbodiimide ou de groupes carboxyle, et
Ibii) d'un carbodiimide (Ibii), qui ne porte sensiblement pas de groupes hydrophiles, qui provoquent la capacité de dispersion dans l'eau,

II) une phase dispersée (P.II), contenant un autre polymère (II), qui porte des groupes carboxyle et qui ne

porte sensiblement pas de groupes carbodiimide.

**2.** Dispersions aqueuses de polyuréthanne à réticulation latente, contenant

I) une phase dispersée (P.I), qui est essentiellement formée d'un polyuréthanne (Ia), qui est constitué

Ia1) de diisocyanates,

Ia1.1) qui contiennent des unités structurelles de carbodiimide, et
éventuellement
Ia1.2) de diisocyanates qui sont exempts d'unités structurelles de carbodiimide,

Ia2) de diols, dont

Ia2.1) 10 à 100 moles %, par rapport à la quantité totale des diols (Ia2), présentent un poids moléculaire de 500 à 5000, et
Ia2.2) 0 à 90 moles %, par rapport à la quantité totale des diols (Ia2), présentent un poids moléculaire de 60 à 500 g/mole,

Ia3) de monomères différents des monomères (Ia1) et (Ia2), qui comportent au moins un groupe isocyanate ou au moins un groupe réactif vis-à-vis des groupes isocyanate et qui portent en outre au moins un groupe hydrophile ou un groupe potentiellement hydrophile, ce qui permet de provoquer la capacité de dispersion dans l'eau des polyuréthannes,
Ia4) éventuellement d'autres composés polyvalents différents des monomères (Ia1) à (Ia3), comportant des groupes réactifs pour lesquels il s'agit de groupes hydroxyle alcooliques, de groupes amino primaires ou secondaires ou de groupes isocyanate, et
Ia5) éventuellement de composés monovalents différents de monomères (Ia1) à (Ia4) comportant un groupe réactif, pour lequel il s'agit d'un groupe hydroxyle alcoolique, d'un groupe amino primaire ou secondaire ou d'un groupe isocyanate.

**3.** Dispersions aqueuses suivant l'une des revendications 1 et 2, dans lesquelles les unités structurelles de carbodiimide sont introduites dans le polyuréthane (Ia) par l'intermédiaire de polyisocyanates (Ia1) de la formule générale Ia1.1.1:

$$OCN\text{-}(R^c\text{-}N{=}C{=}N)_n\text{-}R^c\text{-}NCO \qquad \text{(Ia1.1.1)}$$

dans laquelle $R^c$ représente un radical d'hydrocarbure bivalent, présentant éventuellement des groupes urée, uréthanne, ester et/ou éther, tel qu'il est obtenu par élimination des groupes isocyanate à partir d'un simple isocyanate organique ou d'un prépolymère qui présente des groupes uréthanne et éventuellement des groupes éther ou ester et qui porte en position terminale des groupes isocyanate, différents radicaux $R^c$ correspondant à la définition citée pouvant exister lors de la présence de plusieurs radicaux $R^c$ simultanément dans la même molécule, et

n représente un nombre entier ou fractionnaire (en moyenne statistique) de 1 à 20, de préférence de 2 à 10.

**4.** Dispersions aqueuses suivant l'une des revendications 1 à 3, dans lesquelles les unités structurelles de carbodiimide sont introduites dans le polyuréthanne (Ia) par l'intermédiaire de polyisocyanates (Ia1) de la formule générale Ia1.1.2:

$$O{=}C{=}N\text{—}R^a\left(R^b\right)_m N{=}C{=}O \qquad \text{Ia1.1.2}$$

où

$R^a$ : un groupe de la formule la 1.1.2.1 :

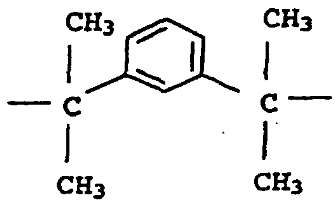

Ia1.1.2.1

$R^b$ : un groupe de la formule Ia1.1.2.2 :

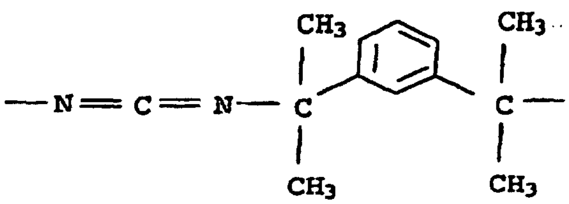

Ia1.1.2.2

et

m : un nombre de 1 à 20.

**5.** Dispersions aqueuses suivant l'une des revendications 1 à 4, dans lesquelles la phase (P.I) est essentiellement formée d'un polyuréthanne (Ia) qui est constitué

Ia1) de diisocyanates,

Ia1.1) qui contiennent des unités structurelles de carbodiimide, et
éventuellement
Ia1.2) de diisocyanates qui sont exempts d'unités structurelles de carbodiimide,

Ia2) de diols, dont

Ia2.1) 10 à 100 moles %, par rapport à la quantité totale des diols (Ia2), présentent un poids moléculaire de 500 à 5000, et
Ia2.2) 0 à 90 moles %, par rapport à la quantité totale des diols (Ia2), présentent un poids moléculaire de 60 à 500 g/mole,

Ia3) de monomères différents des monomères (Ia1) et (Ia2), qui comportent au moins un groupe isocyanate ou au moins un groupe réactif vis-à-vis des groupes isocyanate et qui portent en outre au moins un groupe hydrophile ou un groupe potentiellement hydrophile, ce qui permet de provoquer la capacité de dispersion dans l'eau des polyuréthannes,
Ia4) éventuellement d'autres composés polyvalents différents des monomères (Ia1) à (Ia3), comportant des groupes réactifs pour lesquels il s'agit de groupes hydroxyle alcooliques, de groupes amino primaires ou secondaires ou de groupes isocyanate, et
Ia5) éventuellement de composés monovalents différents des monomères (Ia1) à (Ia4) comportant un groupe réactif, pour lequel il s'agit d'un groupe hydroxyle alcoolique, d'un groupe amino primaire ou secondaire ou d'un groupe isocyanate.

**6.** Dispersions aqueuses suivant l'une des revendications 1 à 5, dans lesquelles le polyuréthanne (Ibi) est constitué

Ibi1) de diisocyanates, qui sont exempts d'unités structurelles de carbodiimide,
Ibi2) de diols, dont

Ibi2.1) 10 à 100 moles %, par rapport à la quantité totale des diols (Ibi2), présentent un poids moléculaire de 500 à 5000, et

Ibi2.2) 0 à 90 moles %, par rapport à la quantité totale des diols (Ibi2), présentent un poids moléculaire de 60 à 500 g/mole,

Ibi3) de monomères différents des monomères (Ibi1) et (Ibi2), qui comportent au moins un groupe isocyanate ou au moins un groupe réactif vis-à-vis des groupes isocyanate et qui portent en outre au moins un groupe hydrophile ou un groupe potentiellement hydrophile, ce qui permet de provoquer la capacité de dispersion dans l'eau des polyuréthannes,

Ibi4) éventuellement d'autres composés polyvalents différents des monomères (Ibi1) à (Ibi3), comportant des groupes réactifs pour lesquels il s'agit de groupes hydroxyle alcooliques, de groupes amino primaires ou secondaires ou de groupes isocyanate, et

Ibi5) éventuellement de composés monovalents différents des monomères (Ibi1) à (Ibi4) comportant un groupe réactif, pour lequel il s'agit d'un groupe hydroxyle alcoolique, d'un groupe amino primaire ou secondaire ou d'un groupe isocyanate.

**7.** Dispersions aqueuses suivant l'une des revendications 1 à 5, dans lesquelles il s'agit, en ce qui concerne le carbodiimide Ibii d'un composé de la formule générale Ibii1 :

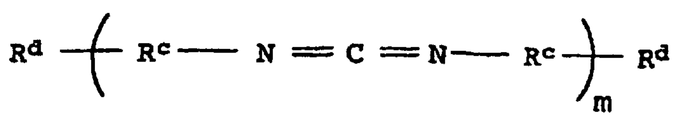

Ibii1

où

n : un nombre entier de 2 à 20,

$R^c$ : comme défini pour la formule générale Ia1.1.1,

$R^d$ : — $NH_2$

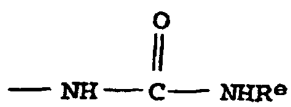

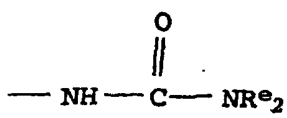

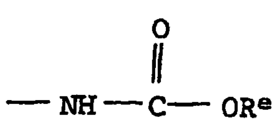

$$—N=C=N— R^e$$

et $R^e$ représente indépendamment de l'alkyle en $C_1$-$C_{20}$, du cycloalkyle en $C_5$-$C_{12}$, de l'aryle en $C_6$-$C_{20}$ ou de l'aralkyle en $C_7$-$C_{20}$, 1 à 4 atomes d'hydrogène des radicaux $R^e$ pouvant être substitués par des substituants inertes vis-à-vis des groupes carbodiimide.

**8.** Dispersions aqueuses suivant la revendication 6, dans lesquelles il s'agit, en ce qui concerne le carbodiimide Ibii, d'un composé de la formule générale Ibii2 ou Ibii3 :

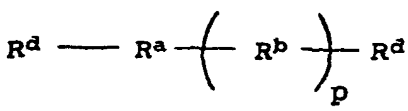

Ibii2

où $R^a$, $R^b$ et $R^d$ ont la même signification que celle indiquée dans les formules Ia1.1.2 et Ibii1 et p représente un nombre de 2 à 20, ou

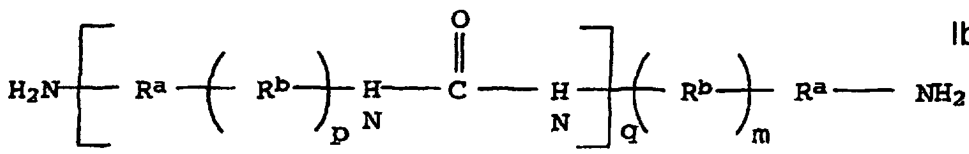

Ibii3

où $R^a$ et $R^b$ ont la signification donnée dans la formule Ia1.1.2, p représente un nombre de 2 à 20 et q représente un nombre de 1 à 10.

**9.** Dispersions aqueuses suivant l'une des revendications 1 à 8, dans lesquelles la phase (PII) est essentiellement formée

IIa) d'un polyuréthanne (IIa), qui porte des groupes carboxyle et qui ne porte sensiblement pas de groupes carbodiimide, ou
IIb) d'un polymère (IIb), qui est dérivé

IIb1) de 30 à 99,9% en poids de monomères principaux choisis parmi des (méth)acrylates d'alkyle en $C_1$-$C_{20}$, des esters vinyliques d'acide carboxylique contenant jusqu'à 20 atomes de C, des substances vinyl-aromatiques comportant jusqu'à 20 atomes de C, des nitriles éthyléniquement insaturés, des halogénures de vinyle et des hydrocarbures aliphatiques comportant 2 à 8 atomes de C et 1 ou 2 doubles liaisons,
IIb2) de 0,01 à 20% en poids d'un acide carboxylique comportant une double liaison oléfinique, et
IIb3) de monomères polymérisables par voie radicalaire différents de (IIb1) et (IIb2),
ou

IIc) de polyester dispersable dans l'eau, qui porte des groupes carboxyle (polymère IIc).

**10.** Dispersions aqueuses suivant la revendication 9, dans lesquelles le polyuréthanne (IIa) est constitué

IIa1) de diisocyanates, qui sont exempts d'unités structurelles de carbodiimide,
IIa2) de diols, dont

IIa2.1) 10 à 100 moles %, par rapport à la quantité totale des diols (IIa2), présentent un poids moléculaire de 500 à 5000, et
IIa2.2)0 à 90 moles %, par rapport à la quantité totale des diols (IIa2), présentent un poids moléculaire de 60 à 500 g/mole,

IIa3) de monomères différents des monomères (IIa1) et (IIa2), qui comportent au moins un groupe isocyanate ou au moins un groupe réactif vis-à-vis des groupes isocyanate et qui portent en outre au moins un groupe hydrophile ou un groupe potentiellement hydrophile, ce qui permet de provoquer la capacité de dispersion dans l'eau des polyuréthannes, au moins pour une partie des monomères (IIa3) le groupe hydrophile ou le groupe potentiellement hydrophile étant un groupe carboxylique ou un groupe carboxylique potentiel,
IIa4) éventuellement d'autres composés polyvalents différents des monomères (IIa1) à (IIa2), comportant des groupes réactifs pour lesquels il s'agit de groupes hydroxyle alcooliques, de groupes amino primaires ou secondaires ou de groupes isocyanate, et
IIa5) éventuellement de composés monovalents différents des monomères (IIa1) à (IIa4) comportant un groupe réactif, pour lequel il s'agit d'un groupe hydroxyle alcoolique, d'un groupe amino primaire ou secondaire ou d'un groupe isocyanate.

**11.** Dispersions aqueuses suivant la revendication 9, dans lesquelles la phase (P.I) est essentiellement formée d'un polyuréthanne Ia ou Ibi dont le composant constitutif Ia3 ou Ibi3 porte des groupes sulfonate et dans lesquelles la phase (P.II) est formée essentiellement d'un polyuréthanne (IIa), dont le composant constitutif (IIa3) porte des groupes carboxyle, qui se présentent partiellement sous la forme de leurs sels d'ammonium ou de métal alcalin.

**12.** Dispersions aqueuses suivant la revendication 9, dans lesquelles la phase (P.II) est essentiellement formée d'un polymère (IIb) qui est dérivé de (méth)acrylates d'alkyle en $C_1$-$C_{20}$ et éventuellement d'acrylonitrile, comme monomères (IIb1), et d'acide (méth)acrylique, comme monomère (IIb2).

**13.** Utilisation des dispersions suivant l'une des revendications 1 à 12, comme produit d'imprégnation, produit d'enduction ou colle.

**14.** Objets en bois, métal, matière textile, cuir ou substance synthétique, qui sont collés, imprégnés ou enduits avec une dispersion aqueuse suivant l'une des revendications 1 à 12.